# EUROPEAN PATENT APPLICATION

(11) **EP 4 478 018 A1**
(43) Date of publication of application: **18.12.2024**
(21) Application number: 23753280.9
(22) Date of filing: 06.02.2023
(51) Int. Cl.: G01K 11/20, B82Y 15/00, G01Q 60/58

(54) **ULTRALOCALIZED OPTICAL HEATING METHOD AND DEVICE FOR CARRYING OUT SAME**

(30) Priority: 08.02.2022 RU 2022102920
(71) Applicant: NanThermix SA, Lausanne, 1015 (CH)
(72) Inventor: TSEEB, Vadim Egonovich, Golovinka, 354202 (RU); ROMSHIN, Aleksei Maksimovich, Khimki, 141501 (RU); VLASOV, Igor Ivanovich, Moskovskiy, 119618 (RU)
(74) Representative: Jeck, Jonathan
(86) International application number: PCT/RU2023/050013
(87) International publication number: WO 2023/153960

(57) **Abstract**

The invention relates to the field of nanotechnology, more particularly to exerting an utralocalized thermal effect on an object under examination, and even more particularly to controlled heating using a nanodiamond heater. The present ultralocalized optical heating method is based on exposing to laser radiation nanoparticles fixed in the end of a glass capillary that is placed in a medium under examination. An ultralocalized optical heating device for carrying out this method comprises a nanoparticle disposed in a glass capillary that is mounted in a micromanipulator, wherein the nanoparticle is disposed in the end of the glass capillary and is a polycrystalline diamond particle containing amorphous carbon at its grain boundaries, which is optically coupled to a source of laser radiation and to a luminescence recording unit, wherein the diamond particle contains at least one luminescent impurity centre and the glass capillary is placed in a medium under examination.

## Description

### CROSS-REFERENCES

This patent application is a National stage application from PCT application PCT/RU2022/050409 filed December 23, 2022, which claims priority to Russian patent application RU 2021139131 filed December 27, 2021.

### REFERENCE TO RELATED PATENTS

At least one specification heading is required. Please delete this heading section if it is not applicable to your application. For more information regarding the headings of the specification, please see MPEP 608.01(a).

### FIELD OF THE INVENTION

The invention relates to the field of nanotechnology, in particular to the field of ultralocal thermal impact on the object under study, namely controlled heating with a nanodiamond heater, and can be used in biomedicine, biotechnology, as well as in engineering of a wide range of nanoscale systems, including new types of chemical nanoreactor.

### BACKGROUND OF THE INVENTION

Temperature is a physical parameter widely used in biophysical and physiological studies. Meanwhile, the reliable ultralocal heating and control of this important parameter is a significant issue. At the same time, the introduction of temperature into the category of reliably controlled parameters of nanosized systems, including living cell compartments, is an important direction in medicine and other fields of science, since the implementation of ultralocal optical heating allows for thermal influence on the processes occurring in micro/nano volumes of liquid and gas media, in living tissues and cells. There are various objects whose temperature should be locally controlled due to the presence of temperature differences within the object under study. For example, it is known that due to its complex internal structure, the cell has local heat sources that alternately arise or die out. The temperature differences between different parts of the cell or between the cell itself and its immediate environment cannot impact on cellular physiology, therefore the development of methods for local and ultralocal controlled heating at nanoscale, characterizing for individual cellular compartments, is an extremely urgent task of modern scientific research and industrial technologies.

The ultralocal heating device described in document [1] is known, which is a hybrid thermometer-heater, in which luminescent diamond nanoparticles (DNPs) with nitrogen-vacancy (NV) centres served as a thermometer, and gold nanorods (hereinafter referred to as GNRs) were used as a heater. This hybrid thermometer-heater was designed as follows. First, the DNPs were covalently coated with polyethyl-eneimine using carbodiimide chemistry - [2], and then the DNP surface was coated with gold nanorods via electrostatic interactions between DNP and GNR in water solution. The average size of the diamond nanoparticles was 100 nm, and the gold nanorods were 10 nm in diameter and 16 nm long. Using an scanning electron microscope, it was found that individual diamond particles contained different numbers of nanorods (up to 50 pcs.) on their surface. The cells were incubated with a large number of hybrid nanoparticles in the growth medium, and the particles were absorbed through endocytosis [3]. The cell position of hybrid nanoparticles was determined using an optical microscope by the luminescence of NV centres in the DNPs. The individual nanoparticles were heated locally by focusing laser radiation at a wavelength of 594 nm onto the selected nanoparticle. The heating temperature of the hybrid nanoparticle was controlled by the spectral position of the phononless luminescence line of NV centers in the diamond nanoparticle. The diamond nanoparticles were not pre-calibrated by temperature; the average value of the line shift at 1°C change in T - 0.015 nm/°C - taken from scientific and technical literature was used.

The following can be considered as disadvantages of the specified local heating device:
- no pre-calibration by temperature of individual diamond nanoparticles when working with a large ensemble of hybrid nanoparticles;
- the heating efficiency of the GNR strongly depends on its orientation, and when the heating temperature increases by 15° C, the rods also become deformed. All this leads to the impossibility of precise heating to the set temperature due to the impossibility of reliable control of the heater temperature during local heating of the medium;
- the accuracy of determining the position of the heater in the medium under study is limited by the transverse size of the focused laser beam (usually at the level of 200-300 nm);
- the impossibility of operating in a gaseous medium (a liquid medium or substrate is required).

The ultralocal heating device described in [4] is known, which is a hybrid thermometer-heater, in which luminescent diamond nanoparticles (DNPs) with nitrogen-vacancy (NV) centres served as the thermometer, and the efficient light-absorbing polymer polydophamine (hereinafter referred to as PDA) was used as the heater. This hybrid thermometer-heater was designed as follows. The dopamine molecules were polymerized on the surface of diamond nanoparticles in Tris-HCl buffer solution. The hybrid nanoparticles consisting of a diamond core with an average size of 100 nm and an outer PDA shell about 50 nm thick were obtained. The cells were incubated with a large number of hybrid nanoparticles in the growth medium, and the particles were absorbed through endocytosis [5]. The cell position of hybrid nanoparticles was determined using an optical microscope by the luminescence of NV centres in the DNPs. The individual nanoparticle was heated locally by focusing laser radiation at a wavelength of 532 nm onto the selected nanoparticle. The laser radiation was absorbed by the PDA shell and heated it, while this radiation simultaneously excited the luminescence of NV centers in the DNC, which was used for quantum measurement of the heater temperature. The quantum temperature measurement is based on determining the temperature-dependent transition energy between the electron spin states of NV centers in zero magnetic field using the fluorescence signal of these centres [6].

The disadvantages of the heating device specified in [4] are as follows:
- there is no pre-calibration by temperature of individual nanoparticles when working with a large ensemble of hybrid nanoparticles. In this case, when using the quantum method for determining the temperature of the individual heater during its heating, the error in determining the temperature can reach 3-5° C, as follows from [7].
- strong absorption of the polymer makes it difficult to measure temperature using the weak luminescence signal of the diamond nanoparticle, as a result of which the use of such heater is only possible at high laser powers, i.e. at high heating temperatures, more than 10° C;
- the accuracy of determining the position of the heater in the medium under study is limited by the transverse size of the focused laser beam (usually at the level of 200-300 nm);
- the impossibility of operating in a gaseous medium (a liquid medium or substrate is required);
- the MW radiation is used to determine the heater temperature, which is well absorbed by liquid media, which can lead to additional uncontrolled heating of the medium under study.

The closest device to the declared one is the local optical heating device described in the source [8]. This device contains an aggregate of aluminum nanoparticles, having micron sizes and placed in a glass capillary in the form of a micropipette, installed in a micromanipulator, which is made with the possibility of pistonwise movement of the micropipette, a laser radiation source and a luminescence recording unit. The laser source radiation is focused onto the micropipette with aluminum particles, which is pre-placed in the medium under study or the medium in which the sample under study is located.

The method for local optical heating described in document [9] is known, in which the optical laser radiation in the near-infrared range impacts on the water medium. The wavelength of the laser radiation is selected so that it falls within the effective absorption band of the medium, and at the same time, local heating of the medium in the cross-section of the focused laser beam at the level of ~1 µm2 is ensured. The known method for local optical heating of water uses an excitation wavelength of 1455 nm. The radiation is focused into the water medium, locally heating a micrometer-sized volume of water near the sample under study (living cell).

However, this method of local optical heating has
the following disadvantages:
- instead of volumetric heating locality, there is a two-dimensional locality, i.e. the column of water medium is heated in the laser beam focusing area, where the radiation power density is maximum. Thus, the known method for local optical heating is realized only in directions perpendicular to the axis of laser radiation propagation;
- due to heating of the extended column of liquid medium, diffusion flows arise, leading to mixing of medium layers with different temperatures. As a result, the temperature gradients created by the heater are non-stationary and non-reproducible;
- the specified method for local optical heating is not universal, since each medium requires a laser source radiating at a wavelength that falls within its effective absorption band, which requires as many sources as the number of media under study.

The above-mentioned disadvantages significantly complicate the implementation of the known method and its application in real systems.

The closest to the declared method is the method for local optical heating, known from [8], which is based on the impact of laser radiation on aluminum nanoparticles fixed at the end of the glass capillary placed in the medium under study, while the laser radiation is effectively absorbed by the aluminum nanoparticles fixed in the glass capillary, and local heating of the medium under study is carried out with nanoparticles.

The main disadvantage of the method and device for local optical heating, known from [8], is the lack of accurate temperature control for the medium under study. A need to use another independent, external system for the heat source temperature control arises, for example, a nanothermometer, to obtain data on the dependence of the temperature of the aluminum particle agglomerate on the laser irradiation power. At the same time, the accuracy of determining the position of the glass capillary in the medium under study is limited by the micron sizes of nanoparticles (usually at the level of more than 1000 nm).

### SUMMARY OF THE INVENTION

Thus, the problem of optical heating in known methods and means is the lack of means for precise (in terms of temperature value) and accurate (in terms of spatial location) ultralocal heating of a given point of the medium under study and reliable temperature control for such heating.

The task of this invention is to develop a method and device for ultralocal optical heating that would provide heating and reliable control of the heating temperature at a given point in the medium under study.

### OBJECT OF THE INVENTION

The technical result, for which the declared group of inventions is aimed, is improvement of the accuracy of ultralocal optical heating at a given point of the medium under study.

### DESCRIPTION OF THE INVENTION

The technical result is achieved by the fact that in the known method of optical heating, based on the effect of laser radiation on nanoparticles fixed at the end face of a glass capillary placed in the medium under study, a polycrystalline diamond nanoparticle is selected as the nanoparticle, the intercrystalline boundaries of which contain amorphous carbon, and the volume of the diamond nanoparticle contains luminescent impurity centers, a two-stage calibration of the diamond particle is carried out, in which, at the first stage of calibration, the luminescence of impurity centers of the diamond nanoparticle fixed in a glass capillary placed in a thermostat is excited by laser radiation, and measurements are carried out to plot the curve of dependence of the spectral position of the maximum of the phononless luminescence line of impurity centers on a given temperature, and at the second stage of calibration, the diamond particle fixed in a glass capillary is placed in the medium under study, measurements are carried out to plot the curve of dependence of the heating temperature of the diamond nanoparticles on the laser radiation power, and after calibration, a glass capillary with a diamond particle is placed at a given point in the medium under study, and the diamond particle is exposed to laser radiation with a power corresponding to a given temperature of local heating taking into account the second calibration curve data.

Optimally, the diamond particle should be pre-coated with a metal layer no more than 20 nm thick, and it is preferable to select silver or gold, or aluminum for metal coating.

In one of the methods, it is reasonable to preheat the diamond particle to 900 - 1000 °C in a vacuum for 5 to 30 minutes.

It is preferable to select the diamond particle with the SiV centers.

Optimally, the diamond particle should have a nanometer size ranging from 50 to 1000 nm.

It is useful to excite the luminescence of SiV centers in a diamond particle by laser radiation with a wavelength of <738 nm and power of <1 mW at the first stage of calibration, and to select power of >1 mW at the second stage of calibration.

The technical result is also achieved by the fact that in the known ultralocal optical heating device containing a nanoparticle placed in a glass capillary installed in a micromanipulator made with the option of pistonwise movement of the glass capillary, a laser radiation source and a luminescence recording unit, also has a polycrystalline diamond particle containing amorphous carbon at the intercrystalline boundaries which is placed in the end face of the glass capillary and optically connected to the laser radiation source and the luminescence recording unit, while the diamond particle contains, at least one luminescent impurity center, and the glass capillary structure provides for installation at a given point of the medium under study for ultralocal heating.

It is preferable to provide for the laser radiation source in the form of optically connected and sequentially mounted laser, mirror, lens and diaphragm, connected to an optical fiber inserted into a glass capillary.

The luminescence recording unit preferably comprises optically interconnected and sequentially mounted components: an objective, a light filter, a diffraction grating, a lens and a photodetector, whereas the diamond particle is located at the focus of the objective.

The micromanipulator version with the option of pistonwise movement in three mutually perpendicular directions can be provided.

The diamond particle can range in size from 50 to 1000 nanometers.

The diamond particle may contain a metal layer on its surface that is no more than 20 nm thick, and it is preferable to select silver, or gold, or aluminum for metal coating.

The glass capillary can be made of borosilicate glass.

### Positive effects of the invention

The set of essential features of the declared group of inventions is unknown in the state of the art.

There is also no information about ultralocal optical heating using a polycrystalline diamond nanoparticle containing amorphous carbon at its intercrystalline boundaries in the state of the art. Unlike ordered carbon in the volume of diamond crystallites, the amorphous carbon at intercrystalline boundaries absorbs the visible spectrum radiation well [10], which helps to expand the range of local heating temperatures at a given point in the declared invention with high accuracy.

Improved accuracy of ultra-local optical heating of the medium under study is based on combining the properties of the thermometer and the heater in one diamond particle, subject to two-stage calibration, which allows for reliable temperature control of ultralocal heating at a given point of the medium under study with low error, not more than 0.5° C.

### BRIEF DESCRIPTION OF DRAWINGS

The declared group of inventions is explained by the following drawings.
FIG. 1 shows a schematic representation of a local optical heating device, as follows: 1 - diamond particle; 2 - glass capillary; 3 - medium under study; 4 - micromanipulator; 5 - optical fiber; 6 - diaphragm; 7 - lens; 8 - mirror; 9 - laser source; 10 - optical objective; 11 - recording unit diaphragm; 12 - diffraction grating; 13 - recording unit lens; 14 - photodetector.
FIG. 2 shows the phononless line of the luminescence spectrum of SiV centers, where the dotted line indicates the wavelength corresponding to the maximum intensity of phononless line 10, and the area of approximation of the phononless line is highlighted in black.
FIG. 3 shows the first calibration curve establishing the relationship between the spectral position of the maximum of the phononless luminescence line of the SiV centers and temperature value.
FIG. 4 shows the second calibration curve establishing the dependence of the heating temperature of the diamond particle on the laser radiation power.
FIG. 5 shows the calibration curve representing the dependence of the heating temperature of aluminum particles on laser irradiation power characterizing the prototype.

### DETAILED DESCRIPTION OF THE INVENTION

### Best mode for carrying out the invention

The method and device for optical ultralocal heating can be implemented as follows.

The ultralocal heating device implementing the declared method contains the glass capillary 2, where the diamond particle 1 is placed, which is selected as a polycrystalline diamond particle of nanometer size containing amorphous carbon at the intercrystalline boundaries, preferably 50 to 1000 nm in size. The diamond particle contains luminescent "silicon vacancy" color centers (SiV) in a preferred variant, a laser source 9 optically connected to a sequentially mounted mirror 8, lens 7, and diaphragm 6. Diaphragm 6 is optically connected to one end of the optical fiber 5, which passes through the glass capillary in the direction of diamond particle 1 located at the end of glass capillary 2. Glass capillary 2 is installed in micromanipulator 4 made with the option of pistonwise movement of glass capillary 2 when it is placed in liquid, gel or gaseous medium 3 for ultralocal heating. Diamond particle 1 is optically connected to the luminescence recording unit, which contains a sequentially mounted objective 10, made without immersion or water immersion in case of operation in water medium, a light filter 11, a diffraction grating 12, a lens 13, a photo detector 14, made, for example, as a sensitive CCD (charge-coupled device) matrix.

The declared method for ultralocal optical heating is implemented using the specified device as follows.

Diamond particle 1 is embedded into the inner channel of the preferably glass capillary 2 as follows. A drop of distilled water with a volume of, for example, 5 µl is applied to the substrate. The diamond crystals are mechanically mixed until formation of a water suspension. The glass capillary is brought to the surface of the drop at the normal line, into the inner channel of which, under the action of capillary forces, a column of water with diamond nanoparticles is drawn. In this case, the glass capillary containing only one nanoparticle is selected.

It is preferable to select diamond particles containing at least one SiV center whose phononless luminescence line is sensitive to temperature changes.

It is possible to implement variants of the method in which the surface of the diamond particle is pre-modified.

The surface of the diamond particle 1 is modified by the methods listed below, which do not limit other modifications.

In one of the variants, the diamond particles are placed into a vacuum chamber with the temperature of about 900 - 1000 ° C and leave there for 5 to 30 minutes until a thin, absorbing (no more than 50% of radiation) graphite layer is formed on the surface of the particle.

In another variant of the method, a thin metal layer (for example, gold, or silver, or aluminum) is applied to the diamond particles. The layer thickness is selected so that no more than 50% of the radiation is absorbed.

In the above-mentioned variants, the absorbing layer (graphite or metal) has no significant impact on the accuracy of the heater temperature measurement, but its thickness is sufficient to ensure heating in a wide temperature range (20-100° C) at low laser radiation power (up to 100 mW).

The formation of an additional absorbing layer on the nanodiamond surface is required to reduce the requirements for the maximum power of the laser used in the heater, which makes the choice of lasers less critical, allowing the use of cheaper lasers, and reduces the possible impact of scattered laser radiation on the medium under study.

The diamond particle unmodified or modified in different variants by one of the above methods is pre-calibrated in two stages. At the first stage, the diamond particle 1 placed in the glass capillary 2 or outside it should be placed in the thermostat, the focused laser radiation is directed at it in order to excite the luminescence of SiV centers, and the measurements of dependence of the spectral position of the maximum of the phononless luminescence line of SiV centers on temperature during its gradual increase in the thermostat at low excitation power (<1 mW), when heating of the particle by radiation can be neglected, are carried out.

The glass capillary 2 with a diamond particle 1 is installed in a socket on the head (not shown in the drawing) of the piezoelectric (hereinafter referred to as MM) 4 and is rigidly fixed with a tightening screw (not shown in the drawings). The MM control unit consisting of a joystick, a displacement controller and software (not shown in the drawings) allows precision positioning of the capillary at a given point of the medium under study 3.

The radiation is supplied from a continuous or pulsed source of laser radiation 9, which, reflecting from mirror 8, passes through the lens 7, in the focal plane of which the diaphragm 6 is located (the aperture of the diaphragm is located at the focal point of the lens 7 on the optical axis), and enters the optical fiber 5, one end of which is brought to the diamond particle 1 through the glass capillary 2. The laser pump radiation released from the optical fiber 5, spreading along the axis of the capillary as through a waveguide, excites the luminescence of SiV-centers in the diamond particle 1, which is collected by an optical objective 10 and directed by it to the diffraction grating 12, which decomposes the luminescent signal into a spectrum. The sensitive photodetector 14 records the luminescence spectrum (hereinafter - LS) of SiV centers. The spectral position of the maximum of the phononless luminescence line is found from the obtained spectrum, following the procedure (hereinafter referred to as the POM).

1) In order to obtain a corrected luminescence spectrum (hereinafter referred to as CLS), the background spectrum recorded in the same spectral range and at the same point in space is subtracted from the LS in the absence of luminescence of SiV centers (when the diamond nanoparticle is diverted away from laser radiation).

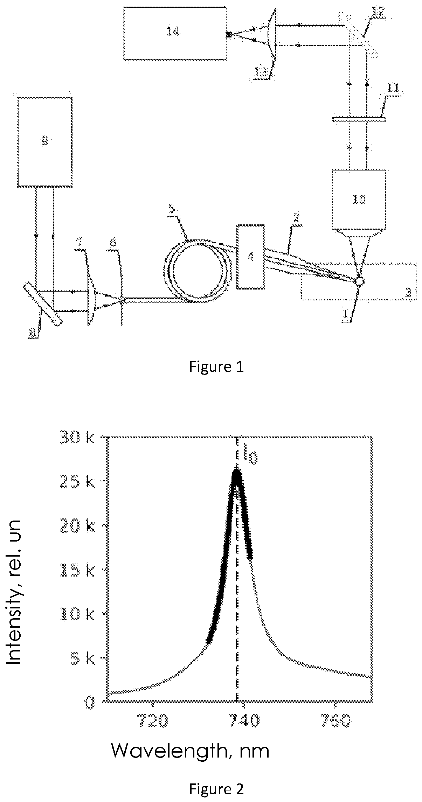

2) For CLS within the spectral range from 730 nm to 750 nm, the value of the maximum intensity of the phononless luminescence line I0 is determined (FIG.2).

3) The long-wavelength part of the spectrum lying below the intensity level 2/3 I0 is excluded from further approximation (in [fig. 2] it is depicted as part of the curve in grey to the right of the maximum value I0). This operation is necessary to exclude the influence of the long-wave phonon wing of the luminescence of SiV centers, which leads to its distortion.

4) The short-wave part of the spectrum lying below the intensity level 1/4 I0 is excluded from further approximation. This action is required to exclude possible influence of additional luminescence sources emitting at a wavelength of less than 738 nm (for example, a small wideband luminescence associated with the sp2 carbon phase on the diamond surface (FIG. 2 - part of the curve in grey to the left of the maximum value I0).

5) The spectrum obtained as a result of performing the actions listed in paragraphs 1-4 (the black area of the curve in FIG.2] is approximated by a Lorentz curve [11]. The λlo spectral position of the maximum of the phononless luminescence line of the SiV centers, expressed in nanometers, is defined from the approximation parameters.

The excitation of the luminescence of SiV centers in a diamond particle is carried out by laser radiation with a wavelength within a range of 450-738 nm and a power of less than 1 mW in preferred variants. The highest luminescence intensity of SiV centers is observed in this wavelength range according to [12]. Low power is necessary to eliminate heating of the diamond particle by radiation during the first stage of calibration.

At the first stage, an experimental calibration curve is constructed representing the dependence of the magnitude of the spectral shift of the maximum position of the phononless luminescence line of the SiV centers contained in a nanometer-sized diamond particle on temperature. For these purposes, the diamond particle 1 in a glass capillary 2 is placed in a thermostat, the temperature in which can be maintained at a predetermined level with an accuracy of 0.1 °C.

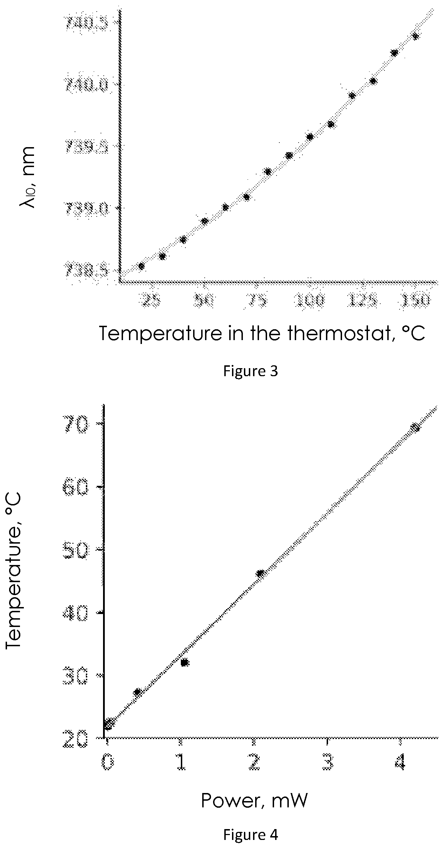

With a stepwise increase in temperature in increments of 100 C, for example, within a range of 22-152 ° C, at each step, the temperature in the thermostat is fixed for the time of measuring the luminescence spectrum of diamond nanoparticle 1 and determining the spectral position of the maximum of the phononless luminescence line of SiV centers in accordance with the POM. The obtained dependence of the position of the maximum of the phononless line λlo (measured in nm) on temperature T is shown by dots in FIG.3. This stepwise dependence is approximated by a smooth curve (FIG.3) using the well-known cubic dependence λlo~T3 [13] and represents a calibration curve.

At the second stage of calibration, the diamond particle 1 is placed in the test medium for heating 3, where, under the influence of a higher power (preferably more than 1 mW) of laser radiation compared to the first stage of calibration, the diamond particle 1 is heated to a certain temperature. Several laser radiation power values are set and for each of them the SiV luminescence spectrum of diamond nanoparticle 1 is measured and the spectral position of the maximum of the phononless luminescence line of SiV centers is determined in accordance with the POM. For each measured maximum position, the corresponding temperature is determined from the first calibration curve (FIG.3). Thus, for several values of the laser radiation power (P), a correspondence is established between this power and the temperature T of the diamond particle heated by this radiation. Several set values of T(P) are plotted on the graph FIG.4 (5 black dots). A straight line is drawn through them using the least square method, which is the second calibration curve representing the curve of temperature dependence on radiation power in one of the implementation options using, for example, a modified diamond particle.

After calibration, a glass capillary tube 2 with a diamond particle 1 is positioned at the set point in the medium under study and the diamond particle is exposed to laser radiation with a power corresponding to the set local heating temperature. The correspondence between power and temperature is determined by the second calibration curve (FIG. 4).

The spatial resolution of the heater temperature is determined by the size of the nanodiamond, which can reach nanometers according to [14]. The positioning accuracy is determined by the technical characteristics of the micromanipulator, namely resolution and reproducibility, which can also reach values in nanometers.

### Examples

The claimed method of local optical heating is explained by the following examples of specific implementation.

### Example 1.

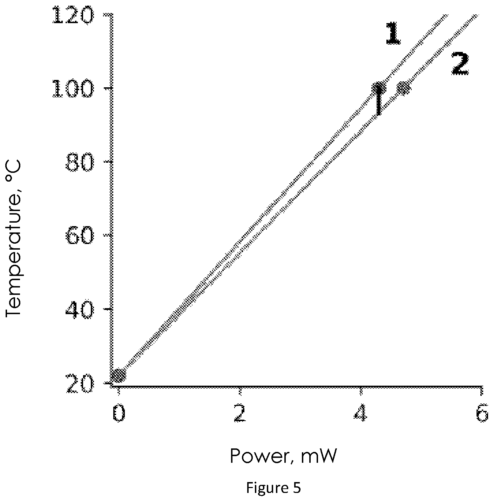

Experimental studies of local heating of water volumes were carried out using a prototype device including a glass capillary with aluminum particles. An aqueous slurry of 0.1 µm aluminum particles of 50 mg/ml concentration was used to implement this device. The glass capillary tube was briefly injected into the suspension until an aggregate of particles of about 1 µm in diameter was formed at its end. The size was controlled via the optical microscope. Then the capillary tube with aluminum particles was lowered into an inch-long Petri dish filled with 2 ml of distilled water. The aluminum nanoparticle aggregate was heated by a laser beam at a wavelength of 473 nm. The excitation radiation was directed to the entrance of a water immersion lens ×63 (NA=0.9), which focused on the nanoparticle aggregate at the end of the capillary tube. The heater was calibrated as follows. The operators turned on the laser and began to gradually increase the power of laser radiation. When bubbles appeared near the heater, i.e. boiling water, power of the pump laser P100 was fixed, which provides heating of the aluminum particle to 100 ° C. The first point was plotted on the calibration graph (FIG.5) - corresponding to the radiation power of P100 and the heater temperature of 100 ° C. Then the second point was plotted - corresponding to the zero radiation power and the room temperature of the heater (22 ° C). The straight line drawn through the two marked points represented the calibration dependence of the radiation power P (T) on the temperature of aluminum particles. In the above example, when the laser was first powered on and subsequent power increase, the water boiled at P100 = 4.3 mW, based on this result, the calibration dependence P(T) was created (indicated by number 1 in FIG.5). Upon the second activation of the laser and its power increase, P100 = 4.7 mW was determined and the calibration dependence P(T) was plotted again (indicated by number 2 in FIG.5). According to temperature deviation (the vertical segment between curves 1 and 2 in FIG.5) between the two calibration dependences at the point P = 4.3 mW, we find that the error in determining the temperature of the heater can reach 8 ° C.

### Example 2.

Diamond nanoparticles were synthesized by gas-phase deposition method (by CVD method) in a microwave reactor in a methane-hydrogen gas mixture with the addition of silane gas, required for the formation of silicon vacancy centers (SiV) during synthesis. The mode of spontaneous generation of diamond nanoparticles was used, in which the synthesized diamond nanoparticles had a predominantly polycrystalline structure. Then diamond nanoparticles containing SiV centers were selected, transferred to an aqueous slurry, from which, under the action of capillary forces, a column of water with one diamond nanoparticle was drawn into the inner channel of the glass capillary tube, which, due to good adhesion between the diamond and the glass, adhered to the end of the glass microcapillary. Microcapillary with a diamond nanoparticle was placed in a thermostat. Laser radiation at a wavelength of 473 nm was used, which was focused on the diamond nanoparticle through a x50 lens (NA=0.55), to excite luminescence and heat the nanoparticle. The power of excitation radiation was preliminarily determined, which does not lead to a shift of the phononless SiV luminescence line, and, consequently, to heating of the nanoparticle. The measured power value was used for the first stage of calibration of the diamond nanoparticle in a thermostat, the temperature in which was stabilized at a predetermined level with an accuracy of up to 0.1 °C. The temperature in the thermostat chamber changed in increments of 10 °C. The SiV luminescence spectrum was recorded at each step (see FIG.2) and the spectral position of the maximum of the phononless line was determined by approximating the Lorentz curve using the Levenberg-Marquadt method [11]. The dependence of the spectral position of the maximum of the phononless line on the temperature set in the thermostat, which was the first calibration curve, was constructed (FIG.3).

The second calibration curve was measured at the next stage - the dependence of the temperature of the diamond nanoparticle on the laser radiation power at a wavelength of 473 nm. For that purpose, the diamond nanoparticle was placed in an aqueous medium at room temperature (22 °C). At each step of increasing the laser radiation power, the SiV luminescence spectrum was recorded and, according to the algorithm described above, the position of the maximum of the phononless line and the heating temperature of the diamond particle corresponding to this position were determined ([fig.3]). The second calibration curve was constructed - the dependence of the temperature of the diamond particle on the power of laser radiation (FIG.4).

Then a glass capillary tube with a diamond nanoparticle was fixed in a micromanipulator and injected into a Petri dish with a saline solution containing living HeLa cells at room temperature. The diamond nanoparticle was heated by radiation from a laser source at a wavelength of 473 nm with a power of 2.5 mW. According to the second calibration curve, this corresponds to the heating temperature of the diamond particle up to 50 °C. To verify the correctness of setting the temperature of the diamond nanoparticle, the shift of the maximum position of the phononless line of SiV centers was determined using a luminescence recording system and, according to the first calibration curve, the temperature of the diamond particle was found to be 50.2 °C.

Conclusion: The proposed method of ultralocal optical heating allows you to set the temperature of a diamond particle in an aqueous medium with an accuracy of 0.2 °C.

### Example 3.

Experimental studies were conducted similarly to Example 2. But the excitation of the luminescence of the SiV centers and the heating of the diamond particle were carried out by laser radiation at a wavelength of 670 nm. The second calibration curve was measured - the dependence of the temperature of a diamond nanoparticle on the power of laser radiation at a wavelength of 670 nm. According to measured dependence, an increase in the radiation power to 5 mW was required to heat the diamond nanoparticle to 28.0 °C. To verify the correctness of setting the heater temperature using a luminescence recording system, the shift of the maximum position of the phononless line of SiV centers was determined when heating a diamond nanoparticle with radiation with a power of 5 mW and according to the first calibration curve (FIG.3), the value of the heater temperature was found, which was 28.1 °C.

### Example 4.

Experimental studies were conducted similarly to Example 2. But the diamond nanoparticle used as a heater was additionally modified by annealing in a vacuum chamber at a temperature of 900 °C for 20 minutes. The temperature dependence of the modified diamond nanoparticle on the laser radiation power at a wavelength of 473 nm was measured. An increase in the radiation power to 3 mW was required to heat the diamond nanoparticle to 60.0 °C, according to the established dependence. At the same radiation power before modification, the nanoparticle was heated weaker, up to 50 °C, which indicates an increase in the absorption capacity of the nanoparticle after its modification. To verify the correctness of the heater temperature setting, using a luminescence recording system, the shift of the maximum position of the phononless line of SiV centers was determined when heating a diamond nanoparticle with radiation with a power of 3 mW and, according to the first calibration curve, the value of the heater temperature was 59.6 °C.

### TECHNICAL FIELD OF THE INVENTION

The main advantage of the present method of ultralocal optical heating is the use of a single unmodified polycrystalline diamond particle or, in other variants, a modified one (coated with a thin graphite-like or metal particle layer) embedded in a glass capillary and containing thermosensitive SiV centers for accurate (with an error of <0.5 ° C) optical control of the heating temperature, and precision ultralocal heating of any given point of the medium under study.

The claimed method of ultralocal optical heating can be widely used as a precision device that allows for controlled guidance of temperature gradients in biological research, as well as in the engineering of a wide range of nano-dimensional systems, also in chemical nanoreactors of a new type.

### Reference to deposited biological material

### Free text of the sequence listing

### References Cited

[1] Tsai, P. C., Epperla, C. P., Huang, J. S., Chen, O. Y., Wu, C. C., & Chang, H. C. Measuring nanoscale thermostability of cell membranes with single gold-diamond nanohybrids. Angewandte Chemie International Edition, 56(11), 3025-3030, 2017.
[2] Chang, C. K., Wu, C. C., Wang, Y. S., & Chang, H. C. Selective extraction and enrichment of multiphosphorylated peptides using polyarginine-coated diamond nanoparticles. Analytical chemistry, 80(10), 3791-3797, 2008.
[3] Epperla, C. P., Mohan, N., Chang, C. W., Chen, C. C., & Chang, H. C. Nanodiamond-mediated intercellular transport of proteins through membrane tunneling nanotubes. Small, 11(45), 6097-6105, 2015.
[4] Fujiwara, M., Sun, S., Dohms, A., Nishimura, Y., Suto, K., Takezawa, Y., Oshimi, K., Zhao, L., Sadzak, N., Umehara, Y., Teki, Y., Komatsu, N., Benson, 0., Shikano, Y., & Kage-Nakadai, E. Real-time nanodiamond thermometry probing in vivo thermogenic responses. Science advances, 6(37), eaba9636, 2020.
[5] Sotoma, S., Zhong, C., Kah, J. C. Y., Yamashita, H., Plakhotnik, T., Harada, Y., & Suzuki, M. In situ measurements of intracellular thermal conductivity using heater-thermometer hybrid diamond nanosensors. Science advances, 7(3), e-abd7888, 2021.
[6] Mukherjee, S., Ghosh, R. N., & Maxfield, F. R. Endocytosis. Physiological reviews, 1997.
[7] Maurer, P. C., Noh, H. J., Kucsko, G., Lukin, M. D., Park, H., & Minako, K. U.
   B. O. U.S. Patent No. 10,436,650. Washington, DC: U.S. Patent and Trademark Office, 2019.
[8] Zeeb, V., Suzuki, M., & Ishiwata, S. I. A novel method of thermal activation and temperature measurement in the microscopic region around single living cells. Journal of neuroscience methods, 139(1), 69-77, 2004.
[9] Oyama, K., Zeeb, V., Kawamura, Y., Arai, T., Gotoh, M., Itoh, H., Itabashi, T., Suzuki, M., & Ishiwata, S. I. Triggering of high-speed neurite outgrowth using an optical microheater. Scientific reports, 5(1), 1-11, 2015.
[10] Robertson, J. Amorphous carbon. Advances in physics, 35(4), 317-374, 1986.
[11] Gill, F., Murray, W., & Wright, M. Practical optimization. World. pp. 188, 1985.
[12] HauBler, S., Thiering, G., Dietrich, A., Waasem, N., Teraji, T., Isoya, J., Iwasaki, T., Hatano, M., Jelezko, F., Gali, A., & Kubanek, A. Photoluminescence excitation spectroscopy of SiV- and GeV- color center in diamond. New Journal of Physics, 19(6), 063036, 2017.
[13] Jahnke, K. D., Sipahigil, A., Binder, J. M., Doherty, M. W., Metsch, M., Rogers, L. J., Manson, N. B., Lukin, M. D., & Jelezko, F. (2015). Electron-phonon processes of the silicon-vacancy centre in diamond. New Journal of Physics, 17(4), 043011.
[14] Vlasov, 1.1., Shiryaev, A. A., Rendler, T., Steinert, S., Lee, S. Y., Antonov, D., Voros, M, Jelezko, F., Fisenko, A. V., Semjonova, L. F., Biskupek, J., Kaiser, U., Lebedev, O. I., Sildos, I., Hemmer, P. R., Konov, V. I., Gali, A., & Wrachtrup, J. Molecular-sized fluorescent nanodiamonds. Nature nanotechnology, V. 9, p. 54-58, 2014.

## Claims

1. An ultralocal optical heating method based on an effect of a laser radiation on nanoparticles fixed in an end face of a glass capillary tube placed in a medium under study, wherein a polycrystalline diamond particle containing amorphous carbon at intercrystalline boundaries is placed in the glass capillary tube, a two-stage calibration of the diamond particle is carried out,
at a first stage of calibration, the laser radiation is applied to the diamond nanoparticle fixed in a glass capillary tube and placed in a thermostat, and measurements are carried out to plot a curve of dependence of a spectral position of a maximum of a phononless luminescence line of impurity centers formed in the diamond particle on a set temperature, and at a second stage of calibration, the glass capillary tube with the diamond particle is placed in the medium under study, measurements are carried out to plot a curve of dependence of a heating temperature of the diamond particle on a laser radiation power, and after calibration, the glass capillary tube with the diamond particle is placed at a given point in the medium under study, and the diamond particle is exposed to the laser radiation with a power corresponding to a given temperature of ultra-local heating taking into account the calibration data.

2. The method according to claim 1, wherein a metal layer with a thickness of no more than 20 nm is applied to a surface of the diamond particle.

3. The method according to claim 2, wherein the metal layer is made of silver or gold or aluminum.

4. The method according to claim 1, wherein the diamond particle is preheated to 900-1000 ° C in vacuum for 5 to 30 minutes.

5. The method according to claim 1, wherein the diamond particle is a diamond particle with a SiV center is selected.

6. The method according to claim 1, wherein the diamond particle is selected with a nanometer size from 50 to 1000 nm.

7. The method according to claim 1, wherein at the first stage of calibration, luminescence of SiV centers in the diamond particle is excited by the laser radiation with a wavelength of less than 738 nm and a power of less than 1 mW.

8. The method according to claim 1, wherein at the second stage of calibration, luminescence of SiV centers in the diamond particle is excited by the laser radiation with a wavelength of less than 738 nm and a power of less than 1 mW.

9. An ultralocal optical heating device for implementation of the method according to claim 1, containing a nanoparticle placed in the glass capillary tube mounted in a micromanipulator made with an ability of reciprocating movement of the glass capillary tube, a laser radiation system and a luminescence recording system, wherein the nanoparticle is the polycrystalline diamond particle containing amorphous carbon at intercrystalline boundaries, which is located at the end of the glass capillary tube and is optically connected to the laser radiation system and the luminescence detection system, while the diamond particle contains at least one luminescent impurity center, and the glass capillary tube is designed to be placed in the medium under study.

10. The ultralocal optical heating device according to claim 9, wherein the laser radiation system contains an optically connected and sequentially mounted laser, a mirror, lens and a diaphragm connected to an optical fiber inserted into the glass capillary tube.

11. The ultralocal optical heating device according to claim 9, wherein the luminescence recording system contains an optically connected and sequentially installed light filter, a diffraction grating, lens and a photodetector.

12. The ultralocal optical heating device according to claim 9, wherein the micromanipulator is designed with the ability of reciprocating motion in three mutually perpendicular directions.

13. The ultralocal optical heating device according to claim 9, wherein the diamond particle has a nanometer size from 50 to 1000 nm.

14. The ultralocal optical heating device according to claim 9, wherein the glass capillary tube is made of borosilicate glass.
